Europäisches Patentamt

European Patent Office

Office européen des brevets

(19)

(11) Veröffentlichungsnummer : **0 136 539**
**B1**

(12) **EUROPÄISCHE PATENTSCHRIFT**

(45) Veröffentlichungstag der Patentschrift :
30.07.86

(21) Anmeldenummer : 84110286.6

(22) Anmeldetag : 29.08.84

(51) Int. Cl.⁴ : **B 01 D 17/02// B01D53/04**

(54) **Verfahren zur Trennung eines bei der Lösemittelrückgewinnung durch Adsorption und Desorption anfallenden Gemisches aus organischen Verbindungen und Wasser.**

(30) Priorität : 02.09.83 DE 3331693

(43) Veröffentlichungstag der Anmeldung :
10.04.85 Patentblatt 85/15

(45) Bekanntmachung des Hinweises auf die Patenterteilung : 30.07.86 Patentblatt 86/31

(84) Benannte Vertragsstaaten :
AT BE CH DE FR GB LI NL

(56) Entgegenhaltungen :
DE-B- 1 202 764
DE-C-  688 726
DE-C-  694 721
DE-U- 7 732 754
ULLMANNS ENCYCLOPÄDIE DER TECHNISCHEN
CHEMIE 3. Auflage, 1 Band 1951, URBAN &
SCHWARZENBERG, München-Berlin

(73) Patentinhaber : BASF Aktiengesellschaft
Carl-Bosch-Strasse 38
D-6700 Ludwigshafen (DE)

(72) Erfinder : Litzenburger, Wolfgang, Dr.
Barbarossaweg 1
D-6733 Hassloch (DE)
Erfinder : Janisch, Gerhard, Dr.
Osloer Weg 44
D-6700 Ludwigshafen (DE)

EP 0 136 539 B1

**Beschreibung**

Die vorliegende Erfindung betrifft ein Verfahren zur Trennung eines bei der Lösemittelrückgewinnung durch Adsorption und Desorption anfallenden Gemisches aus organischen Verbindungen und Wasser.

Bei der Rückgewinnung von Lösemitteln aus Abgasen durch Adsorptionsverfahren fällt, wenn die Adsorber mit Wasserdampf desorbiert werden, ein Lösemittel-Wasser-Gemisch an.

Es ist bekannt, die bei der Desorption anfallenden ineinander löslichen Komponenten Wasser und Lösemittel durch Rektifikation zu trennen. Besitzt das Lösemittel-Wasser-Gemisch darüber hinaus einen azeotropen Punkt, so kann beispielsweise über eine Zweidruckdestillation oder eine Nachtrocknung des Azeotrop-Gemisches aus der Rektifikationskolonne mittels Lauge, Säure oder Salzlösung das Lösemittel bis auf die gewünschte Gleichgewichtskonzentration getrocknet werden.

Dabei ist allerdings von Nachteil, daß einerseits die Zweidruckdestillation einen relativ hohen Apparate- und Energieaufwand zur Folge hat, während andererseits die Nachtrocknung mittels Lauge, Säure oder Salzlösung aufwendige Entsorgungsverfahren, und damit hohe Betriebskosten mit sich bringt. Des weiteren muß der bei der Desorption eingesetzte Wasserdampf anschließend als Abwasser mit Spuren von Lösemitteln abgeführt werden, wobei im Falle von Störungsfällen in der Verfahrensweise eine negative Beeinflussung der Umwelt eintreten kann.

Der Erfindung lag daher die Aufgabe zugrunde, obige Nachteile zu beheben.

Diese Aufgabe wird erfindungsgemäß dadurch gelöst, daß dem Gemisch aus organischen Verbindungen und Wasser in einer Extraktionskolonne mittels hochkonzentrierter Lauge das Wasser entzogen, die dadurch entstehende, verdünnte Lauge anschließend in einem Eindampfer mittels Fremddampf eingedampft, der dabei entstehende Wasserdampf den Adsorbern zur Desorption der organischen Verbindungen und die entstehende hochkonzentrierte Lauge wieder der Extraktionskolonne zugeführt wird und die wasserfreien organischen Verbindungen ausgeschleust werden.

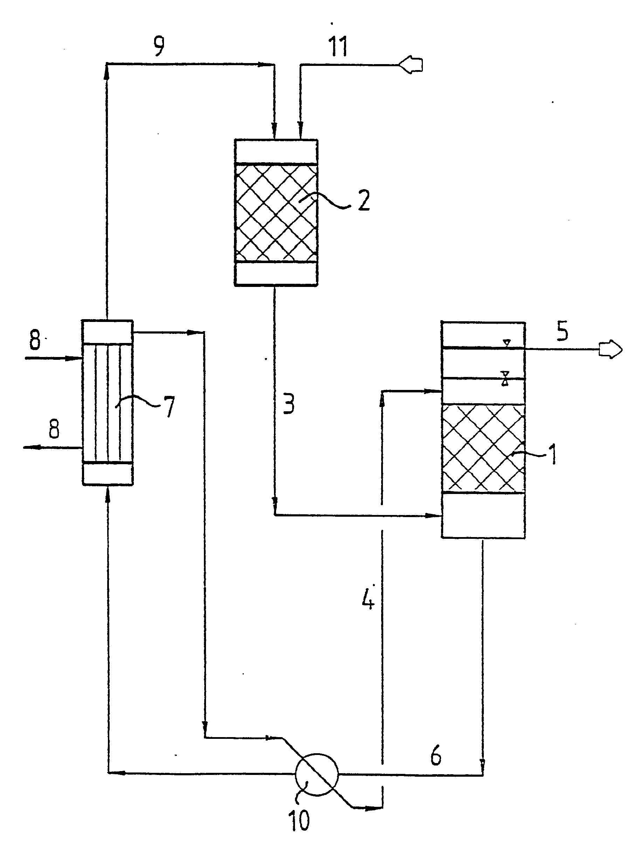

Ein Ausführungsbeispiel der Erfindung ist in der Zeichnung dargestellt und wird im folgenden näher beschrieben. Die Zeichnung zeigt ein schematisches Verfahrensfließbild des erfindungsgemäßen Verfahrens.

Der Extraktionskolonne 1 werden am Sumpf das aus dem Adsorber 2 nach der Desorption anfallende Lösemittel-Wasser-Gemisch 3 und am Kopf konzentrierte Lauge 4 zugefahren. Mittels einer vorgegebenen Konzentration und eines vorbestimmten Mengenflusses der Lauge 4 wird erreicht am Kopf der Extraktionskolonne 1 das Lösemittel 5 mit einem Restgehalt an Wasser von ca. 1 % abzuziehen, während aus dem Sumpf der Extraktionskolonne 1 eine verdünnte Lauge 6 abgezogen wird. Diese verdünnte Lauge 6 wird im Eindampfer 7 mittels Fremddampf 8 auf die Konzentration eingedampft, mit der die Lauge 4 wieder der Extraktionskolonne 1 im Kreislauf zugefahren wird. Der bei der Eindampfung der Lauge 6 anfallende Wasserdampf 9 wird im Kreislauf dem Adsorber 2 als Desorptionsdampf zugeführt. Die mit dem Lösemittel 5 abgezogene Wassermenge (ca. 1 %) wird vor der Desorption als Frischdampf 11 extern zugeführt.

Um die Fremddampfmenge 8 — notwendig für die Eindampfung der verdünnten Lauge 6 — zu reduzieren ist es erfindungsgemäß vorteilhaft, die verdünnte Lauge 6 mit niederem Temperaturniveau mittels der konzentrierten Lauge 4 mit hohem Temperaturniveau im Wärmetauscher 10 im Gegenstrom aufzuwärmen. Weiter ist es erfingungsgemäß vorteilhaft, die Eindampfung der verdünnten Lauge (Extraktionsmittels) unter Druck durchzuführen, um den erzeugten Wasserdampf direkt den Adsorbern unter Druck zuzuführen. Unter Umständen ist es von Vorteil, zwecks Reduzierung der Verdampfungstemperatur, die Eindampfung der verdünnten Lauge (Extraktionsmittels) unter Vakuum durchzuführen. Erfolgt die Eindampfung des Extraktionsmittels unter Atmosphärendruck oder Vakuum ist es erfindungsgemäß notwendig, daß der erzeugte Wasserdampf 9 (Desorptionsdampf) über handelsübliche zwischengeschaltete Brüdenverdichter und/oder Dampfüberhitzer auf den für die Desorption notwendigen Überdruck gebracht wird.

Beispielhaft kann das erfindungsgemäße Verfahren wie folgt durchgeführt werden. Aus dem Adsorber werden 1 727 kg/h Lösemittel und 3 648 kg/h Wasser mit der Temperatur von ca. 20 °C der Extraktionskolonne am Sumpf zugeführt. Am Kopf der Extraktionskolonne werden 7 337 kg/h KOH und 6 004 kg/h Wasser mit der Temperatur von ca. 50 °C aufgegeben. Nach dem Phasenaustausch innerhalb der Extraktionskolonne werden am Kopf 1 727 kg/h Lösemittel und 15 kg/h Wasser und am Sumpf 7 337 kg/h KOH und 9 637 kg/h Wasser mit der Temperatur von ca. 38 °C abgezogen, die zum Eindampfer geführt werden. Aus dem Eindampfer gelangen 3 633 kg/h Wasser als Desorptionsdampf mit ca. 175 °C zum Adsorber und die oben erwähnten 7 337 kg/h KOH und 6 004 kg/h Wasser werden mittels des Wärmetauschers von ca. 175 °C auf ca. 50 °C abgekühlt, während die zum Eindampfer geführte verdünnte Lauge von ca. 38 °C auf ca. 118 °C aufgewärmt wird. Die mit dem Lösemittel aus dem Verfahren abgeführten 15 kg/h Wasser werden als Frischdampf wieder dem Verfahren zugeführt. Der Wasserdampf, der bei der Desorption in dem Aktivkohlebett des Adsorbers verbleibt und beim Trocknen desselben ausgetrieben wird, muß zusätzlich zum Desorptionsdampf zugefahren werden.

Die erzielten Vorteile des erfindungsgemäßen Verfahrens liegen insbesondere darin, die Kosten für die Entsorgung der Lauge zu minimieren und die Energiekosten zu reduzieren. Gleichzeitig wird mit dem erfindungsgemäßen Verfahren eine Verbesserung des Umweltschutzes erreicht, da kein Abwasser aus dem Verfahren abgeführt werden muß.

## Patentansprüche

1. Verfahren zur Trennung eines bei der Lösemittelrückgewinnung durch Adsorption und Desorption anfallenden Gemisches aus organischen Verbindungen und Wasser, dadurch gekennzeichnet, daß dem Gemisch aus organischen Verbindungen und Wasser in einer Extraktionskolonne mittels hochkonzentrierter Lauge (Extraktionsmittel) das Wasser entzogen, die dadurch entstehende, verdünnte Lauge (Extraktionsmittel) anschließend in einem Eindampfer mittels Fremddampf eingedampft, der dabei entstehende Wasserdampf den Adsorbern zur Desorption der organischen Verbindungen und die entstehende hochkonzentrierte Lauge wieder der Extraktionskolonne zugeführt wird und die wasserfreien organischen Verbindungen ausgeschleust werden.

2. Verfahren nach Anspruch 1, dadurch gekennzeichnet, daß statt der Lauge eine wäßrige Salzlösung oder eine Säure als Extraktionsmittel verwendet wird.

3. Verfahren nach den Ansprüchen 1 und 2, dadurch gekennzeichnet, daß die Eindampfung des Extraktionsmittels unter Druck durchgeführt wird.

4. Verfahren nach den Ansprüchen 1 und 2, dadurch gekennzeichnet, daß die Eindampfung des Extraktionsmittels unter Vakuum durchgeführt wird.

5. Verfahren nach den Ansprüchen 1 und 2, dadurch gekennzeichnet, daß der Brüdendampf bei der Eindampfung des Extraktionsmittels über zwischengeschaltete Brüdenverdichter und/oder Dampfüberhitzer auf ein höheres Druckniveau gebracht wird.

6. Verfahren nach den Ansprüchen 1 bis 5, dadurch gekennzeichnet, daß in einem Wärmetauscher das verdünnte Extraktionsmittel aus der Extraktionskolonne durch das hochkonzentrierte Extraktionsmittel aus dem Eindampfer aufgewärmt wird.

## Claims

1. A process for separating a mixture which consists of organic compounds and water and is obtained in solvent recovery by adsorption and desorption, wherein the water is removed from the said mixture in an extraction column by means of a highly concentrated alkali solution (extracting agent), the resulting dilute alkali solution (extracting agent) is then evaporated down in an evaporator by means of added steam, the steam formed in this operation is fed to the adsorbers for desorption of the organic compounds, the resulting highly concentrated alkali solution is recycled to the extraction column, and the anhydrous organic compounds are removed.

2. A process as claimed in claim 1, wherein, instead of the alkali solution, an aqueous salt solution or an acid is used as the extracting agent.

3. A process as claimed in claims 1 and 2, wherein the extracting agent is evaporated down under superatmospheric pressure.

4. A process as claimed in claims 1 and 2, wherein the extracting agent is evaporated down under reduced pressure.

5. A process as claimed in claims 1 and 2, wherein the steam obtained in the evaporation of the extracting agent is brought to a higher pressure by means of interposed vapor compressors and/or steam superheaters.

6. A process as claimed in claims 1 to 5, wherein the dilute extracting agent from the extraction column is heated up, in a heat exchanger, by means of the highly concentrated extracting agent from the evaporator.

## Revendications

1. Procédé pour séparer de composés organiques et d'eau un mélange résultant d'adsorption et désorption effectuées lors d'une récupération de solvant, caractérisé par le fait qu'on extrait l'eau du mélange de composés organiques et d'eau, dans une colonne d'extraction, au moyen d'une lessive fortement concentrée (agent d'extraction), on concentre ensuite dans un évaporateur, au moyen de vapeur étrangère, la lessive ainsi diluée (agent d'extraction), on envoie la vapeur d'eau ainsi créée à l'appareil d'adsorption pour la désorption des composés organiques, et la lessive fortement concentrée résultante est renvoyée à la colonne d'extraction et on évacue les composés organiques débarrassés de l'eau.

2. Procédé selon la revendication 1, caractérisé par le fait qu'on utilise, comme agent d'extraction, à la place de la lessive, une solution saline ou un acide.

3. Procédé selon les revendications 1 ou 2, caractérisé par le fait qu'on effectue la concentration, par évaporation, de l'agent d'extraction, sous pression.

4. Procédé selon les revendications 1 ou 2, caractérisé par le fait qu'on effectue la concentration de l'agent d'extraction sous vide.

5. Procédé selon les revendications 1 ou 2, caractérisé par le fait que, lors de la concentration par évaporation de l'agent d'extraction, on porte la vapeur chaude à un niveau de pression élevé, par l'intermédiaire de compresseurs de vapeurs et/ou surchauffeurs de vapeur intercalés.

6. Procédé selon l'une des revendications 1 à 5, caractérisé par le fait que, dans un échangeur de chaleur, l'agent d'extraction dilué provenant de la colonne d'extraction est réchauffée par l'agent d'extraction fortement concentré provenant de l'évaporateur.